(19) Europäisches Patentamt
European Patent Office
Office européen des brevets

(11) **EP 2 916 097 A1**

(12) **EUROPÄISCHE PATENTANMELDUNG**

(43) Veröffentlichungstag:
**09.09.2015 Patentblatt 2015/37**

(51) Int Cl.:
***F41G 1/473*** *(2006.01)*

(21) Anmeldenummer: **15153726.3**

(22) Anmeldetag: **04.02.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.03.2014 DE 102014102966**

(71) Anmelder: **GSO German Sports Optics GmbH & Co. KG**
**35444 Biebertal (DE)**

(72) Erfinder: **Senne, David**
**30559 Hannover (DE)**

(74) Vertreter: **Charrier, Rapp & Liebau**
**Patentanwälte**
**Fuggerstrasse 20**
**86150 Augsburg (DE)**

(54) **Optische Vorrichtung mit einer Messskala**

(57) Die Erfindung betrifft eine optische Vorrichtung (1) mit mindestens einer Messskala (9) zur Bestimmung der Entfernung E zu einem durch die Messskala (9) betrachteten Objekt (3) mit zumindest annähernd bekannter Größe B. Um eine schnelle, objektgrößen-unabhängige Ablesbarkeit von Messwerten und eine einfachere Berechnung der Entfernung zu einem Objekt aus den abgelesenen Messwerten zu ermöglichen, umfasst die Messskala (9) eine Bezugsmarkierung (6) und mindestens eine weitere Messmarkierung (7a-7j) mit einem ihr zugeordneten Zahlenwert (8a-8j), der umgekehrt proportional zum Abstand der Bezugsmarkierung (6) von der jeweiligen Messmarkierung (7a-7j) ist. Die Entfernung E ergibt sich zu dem durch die Messskala (9) betrachteten Objekt (3) durch eine Multiplikation der Größe B des Objekts (3) mit einem von der Messskala (9) abgelesenen Messwert.

Fig. 1b

EP 2 916 097 A1

**Beschreibung**

Die Erfindung betrifft eine optische Vorrichtung mit meiner Messskala zur Bestimmung einer Entfernung zu einem durch die Messskala betrachteten Objekt und ein Verfahren zur Bestimmung einer Entfernung.

Ein Objekt einer bestimmten Größe B füllt, von einem Beobachter wie z. B. einem Schützen aus betrachtet, abhängig von der Entfernung E einen bestimmten Winkel β aus. Die Formel hierzu lautet $\sin\beta = B/E$. Der Zusammenhang aus Objektgröße, Entfernung und ausgefülltem Betrachtungswinkel erlaubt bei zwei bekannten Variablen die Bestimmung der dritten (unbekannten) Variablen. Diesen Zusammenhang macht sich die sogenannte stadiametrische Entfernungsmessung zunutze. Die Winkelmessung kann unter anderem mit Hilfe von Strichplatten in Beobachtungs- und Zieloptiken durchgeführt werden. Auf der Strichplatte werden dafür Markierungen angebracht, die dem Beobachter das Ablesen des vom Objekt ausgefüllten Winkels erlauben. Bei bekannter Objektgröße lässt sich mit Hilfe des abgelesenen Winkels die Entfernung berechnen. Die erreichbare Genauigkeit des Ergebnisses hängt dabei davon ab, wie genau der Winkel abgelesen werden kann und wie genau die Größe des betreffenden Objektes bekannt ist. Zur Vereinfachung wird dabei eine mathematische lineare Näherung durchgeführt.

Obwohl heute zumeist leistungsfähige Laser-Entfernungsmesser zur Verfügung stehen, spielt die Entfernungsmessung mittels Strichplatte weiterhin eine wichtige Rolle. Sie dient als alternative Methode, falls der Laser-Entfernungsmesser ausfällt oder wenn wegen der Gefahr einer Erkennung des Lasers nur ein passives System verwendet werden kann. Daher wird das Entfernungsschätzen mittels Strichplatte nach wie vor in der Scharfschützenausbildung gelehrt und auch in entsprechenden sportlichen Wettkämpfen wird das Ermitteln der Zieldistanz lediglich mit Hilfe des sogenannten Absehens gefordert. Aktuelle Zieloptiken beinhalten daher weiterhin oft spezielle Markierungen zur stadiametrischen Entfernungsmessung, ohne dass es gegenüber den seit Jahrzehnten bekannten Methoden eine substanzielle Weiterentwicklung gegeben hätte.

Aus dem Stand der Technik sind Zieloptiken bekannt, die verschiedene Systeme zur Entfernungsmessung nutzen. Das heute am weitesten verbreitete derartige System ist das sogenannte "Mildot"-Absehen einer Zieloptik, die mit Punkten versehen ist, welche einen Winkel von jeweils einem Milliradiant (mrad) anzeigen. Ein mrad ist definiert als die Bogenlänge, die 1/1000 der Radienlänge beträgt. Ein mrad entspricht dabei 10 cm auf 100 m oder 1 m auf 1000 m, usw. Dies würde einer näherungsweisen Übertragung der Näherung (für kleine Winkel) in das metrische System entsprechen. Zunehmend verbreitet sind Strichplatten, die keine (früher aus Gründen der Herstellbarkeit bei Drahtabsehen verwendeten) Punkte verwenden sondern Skalenstriche, die auch feinere Einteilungen erlauben.

Die Mrad-Skala ist universell anwendbar und nicht an eine bestimmte Objektgröße gebunden. Sie kann sowohl zur Entfernungsermittlung als auch zur Treffpunktkorrektur verwendet werden.

Die linear genäherte Formel zur Entfernungsbestimmung lautet:

$$\textit{Objektgröße B [m] x 1000 ÷ Messwert [mrad] = Entfernung E [m]}$$

Vorteile der Mrad-Skala sind die universelle Verwendbarkeit und die mögliche feine Einteilung, die eine hohe Genauigkeit ermöglicht. Eine Skala mit einer Einteilung von 0,1 mrad ist bei entsprechender Vergrößerung der Optik praktikabel.

Die Skaleneinteilung kann auch in jedem anderen Winkelmaß erfolgen. Im englischen Sprachraum sind Winkelminuten (MOA, minute of angle) weiterhin verbreitet, die SI-Einheit (Milli-)Radiant ist jedoch in Verbindung mit dem Dezimalsystem vorteilhafter, da das Verhältnis 1/1000 bei Berechnungen eine reine Kommaverschiebung ohne einen zusätzlichen Faktor bewirkt.

Ein derartiges System bezüglich des "Mildot"-Absehens geht beispielsweise aus dem amerikanischen Patent US 7,185,455 B2 hervor. Dieses zeigt ein Fadenkreuz mit einer primären horizontalen Sichtlinie und vertikalen Sichtlinie, welche sich in einem Zielpunkt schneiden. Auf den Sichtlinien sind weitere Zielmarken in Form von Strichen angeordnet, welche eine Skala bilden und die jeweils senkrecht die Sichtlinien schneiden. Die Abstände der einzelnen Zielmarken auf den Sichtlinien unterteilen die Skala dabei in bestimmte mrad-Maße, beispielsweise von 2,5 mrad (mils). Darüber weist die Länge der jeweiligen Zielmarkierung ebenfalls eine mrad Einteilung von z. B. 0,1, 0,3 oder 0,5 auf. Zur Berechnung der Entfernung zu einem Ziel ist die oben genannte Formel heranzuziehen.

Nachteilig ist hierbei die bei der Berechnung notwendige Division mit ggf. ungeraden Werten, die sich meist nicht im Kopf durchführen lässt. Der Benutzer ist daher zur Berechnung der Entfernung auf einen Taschenrechner, tabellierte Werte oder einen speziell zu diesem Zweck hergestellten Rechenschieber (US-Patent 5960576) angewiesen. Alle diese Berechnungsmethoden führen dazu, dass der Schütze während der Berechnung das Zielbild aus den Augen verliert. Außerdem erfordern sie Hilfsmittel, die ggf. nicht funktionieren oder verloren gehen können.

Die zweite Möglichkeit zur Entfernungsermittlung mit Hilfe der Strichplatte ist eine auf eine bestimmte Objektgröße angepasste Skala. Dabei sind auf der Strichplatte Markierungen angebracht, zwischen die ein Zielobjekt einer bestimmten Größe eingepasst wird. Die zur Objektgröße passende Markierung ist mit der entsprechenden Entfernung beschriftet. Ist ein passendes Zielobjekt vorhanden, so kann die Entfernung direkt und ohne weitere Rechnung abgelesen werden.

Aus dem militärischen Bereich bekannte Zieloptiken verwenden häufig Markierungen, die der Größe eines stehenden Mannziels entsprechen (1,5 - 1,8 m), ansonsten ist das Standardmaß von 1 m Höhe (Abstand Scheitel bis Schritt eines Mannziels) gängig. Ebenfalls verbreitet sind Markierungen, die der Schulterbreite eines Mannziels (0,45 m oder 0,5 m) entsprechen, oder Kombinationen aus 1 m Höhe und 0,5 m Breite. Es existieren aber auch verschiedenste an die Größe bestimmter Tiere oder beispielsweise an Fahrzeugsilhouetten (bspw. bei Optiken für Panzerabwehr-Handwaffen) angepasste Strichplatten, die jeweils mit Entfernungsmarken versehen sind. Auch die Zieloptiken von Kampfpanzern verfügen als Ersatz für einen ggf. ausgefallenen Laser-Entfernungsmesser oft über entsprechende Strichplatten.

Problematisch ist hierbei, dass die Markierungen auf eine bestimmte Größe des Zielobjekts ausgelegt sind. Ist kein Objekt der passenden Größe sichtbar, z. B. weil das Ziel teilweise verdeckt ist, so sind die Markierungen nicht verwendbar. Ferner müssen bei Zwischendistanzen Zwischenwerte geschätzt werden, was häufig durch die getrennte Anordnung der Markierungen für unterschiedliche Entfernungen erschwert wird.

Aufgabe der Erfindung ist es, eine optische Vorrichtung und eine Verfahren zu schaffen, welche eine schnelle, objektgrößen-unabhängige Ablesbarkeit von Messwerten und eine einfachere Berechnung der Entfernung zu einem Objekt aus den abgelesenen Messwerten ermöglichen.

Diese Aufgabe wird durch eine optische Vorrichtung mit den Merkmalen des Anspruchs 1 und ein Verfahren nach Anspruch 10 gelöst. Bevorzugte Ausführungsformen der optischen Vorrichtung sind in den Unteransprüchen angegeben.

Die erfindungsgemäße optische Vorrichtung weist mindestens eine Messskala zur Bestimmung der Entfernung E zu einem durch die Messskala betrachteten Objekt mit zumindest annähernd bekannter Größe B auf, wobei die Messskala eine Bezugsmarkierung und mindestens eine weitere Messmarkierung mit einem ihr zugeordneten Zahlenwert umfasst, der umgekehrt proportional zum Abstand der Bezugsmarkierung von der jeweiligen Messmarkierung ist, und wobei sich die Entfernung E zu dem durch die Messskala betrachteten Objekt durch eine Multiplikation der Größe B des Objekts mit einem von der Messskala abgelesenen Messwert ergibt.

Aufgrund der Zahlen der Messskala ist die ansonsten bei einer Verwendung einer mrad-Skala und der zugehörigen Formel notwendige Division nicht notwendig, da zur Berechnung der Entfernung lediglich eine sehr viel einfacher im Kopf durchführbare Multiplikation durchzuführen ist.

Es ergibt sich beispielsweise folgende Formel zur Entfernungsbestimmung:

$$\textit{Objektgröße B [m] x 100 x Messwert } = \textit{Entfernung E [m]}$$

In einer besonders vorteilhaften Ausgestaltung umfasst die optische Vorrichtung mehrere Messmarkierungen mit zugeordneten ganzzahligen Zahlenwerten, wobei sich jeder Zahlenwert aus einer Multiplikation des reziproken Abstands der zugeordneten Messmarkierung von der Bezugsmarkierung mit einem vorgegebenen Proportionalitätsfaktor P ergibt, wobei $P = 10^n$ entspricht und n eine natürliche Zahl ist, insbesondere 1, 2 oder 3.

Auf Grund der Verwendung eines Proportionalitätsfaktors ergeben sich ganzzahlige Zahlenwerte, wodurch verhindert wird, dass die Skala Kommastellen enthält. Dadurch wird die Handhabbarkeit bei der Multiplikation im Kopf verbessert. Bei n = 1 ergibt sich der Vorteil, dass die Größe des Objekts bei der Rechnung in Zentimetern anstatt Millimetern angenommen werden kann.

Die vorgenannte Formel kann hierzu vereinfacht dargestellt werden:

$$\textit{Objektgröße B [cm] x Messwert } = \textit{Entfernung E [m]}$$

In einer zweckmäßigen Ausführungsform sind den jeweiligen Messmarkierungen der optischen Vorrichtung optisch sichtbare Zahlenwerte zugeordnet.

Nach einer zweckmäßigen Ausführungsform sind die Messmarkierungen der Messskala in einer Reihe angeordnet. Hierdurch können Zwischenwerte besser abgeschätzt werden, da die Messskala wie ein "Maßband" an das Objekt angelegt werden kann und der Beobachter nicht zwischen verschiedenen Distanzmarken wechseln muss, wie bei objektspezifischen Messskalen üblich.

In einer weiteren vorteilhaften Ausführung sind mehrere Messskalen vorgesehen, welche beispielsweise im Wesentlichen senkrecht zueinander angeordnet sein können. Hierdurch können verschiedene Größen des Objekts, wie Schulterbreite oder Höhe, zur Berechnung der Entfernung herangezogen werden. Die Messskalen können dabei beispielsweise in den unterschiedlichen Bereichen der Strichplatte angeordnet sein.

Nach einer zweckmäßigen Ausführungsform weisen die mehreren Messskalen unterschiedliche Einteilungen auf. Hierdurch können sowohl beispielsweise eine bekannte mrad-Skala oder eine bekannte objektspezifische Messskala mit der erfindungsgemäßen Messskala in einer Strichplatte verwendet werden.

In einer zweckmäßigen Ausgestaltung können die mehreren Messskalen z. B. senkrecht zueinander angeordnet sein.

Zur Bestimmung der Entfernung zu einem Objekt mit zumindest annähernd bekannter Größe mittels einer optischen Vorrichtung mit Messskala gemäß der Erfindung werden in dem erfindungsgemäßen Verfahren zunächst zwei Referenzpunkte des Objekts durch die Messskala betrachtet. Danach wird an den ersten Referenzpunkt des Objekts die Bezugsmarkierung angelegt. Daraufhin wird ein Messwert auf der Messskala erfasst, welcher mit dem zweiten Referenzpunkt deckungsgleich ist, wobei anschließend der erfasste Messwert auf der Messskala abgelesen wird. Schließlich wird zur Bestimmung der Entfernung E zum Objekt die zumindest annähernd bekannte Größe B des Objekts mit dem erfassten Messwert multipliziert.

Aufgrund der umgekehrt proportionalen Anordnung der Markierungen ist die ansonsten bei einer Verwendung einer mrad-Skala und der zugehörigen Formel notwendige Division nicht notwendig, da zur Berechnung der Entfernung lediglich eine sehr viel einfacher im Kopf durchführbare Multiplikation durchzuführen ist.

Diese und weitere Vorteile der erfindungsgemäßen optischen Vorrichtung mit einer Messskala zur Bestimmung einer Entfernung und einem Verfahren hierzu ergeben sich aus den nachfolgend unter Bezugnahme auf die begleitenden Zeichnungen näher beschriebenen Ausführungsbeispielen. Es zeigen:

**Figur 1** eine schematische Darstellung einer optischen Vorrichtung mit einer Messskala zur Entfernungsmessung (Figur 1a), eine erste Ausführungsform der vergrößerten Darstellung des in Figur 1a im Kreis dargestellten Ausschnitts (Figur 1b), eine zweite Ausführungsform der vergrößerten Darstellung des in Figur 1a im Kreis dargestellten Ausschnitts (Figur 1c) und eine schematische Darstellung der Strichplatte in einer optischen Vorrichtung (Figur 1d);

**Figur 2** eine Darstellung des Aufbaus einer erfindungsgemäßen Messskala;

**Figur 3** eine schematische Darstellung einer Messskala auf der Strichplatte gemäß der Erfindung beim Erfassen der Messwerte für eine bekannte Höhe eines Objekts (Figur 3a) und Breite eines Objekts (Figur 3b) und

**Figur 4** eine Darstellung einer ersten Ausführungsform einer alternativen Messskala einer Strichplatte mit erweiterter Messskala (Figur 4a) und eine Darstellung einer zweiten Ausführungsform einer alternativen Messskala einer Strichplatte mit erweiterter Messskala (Figur 4b).

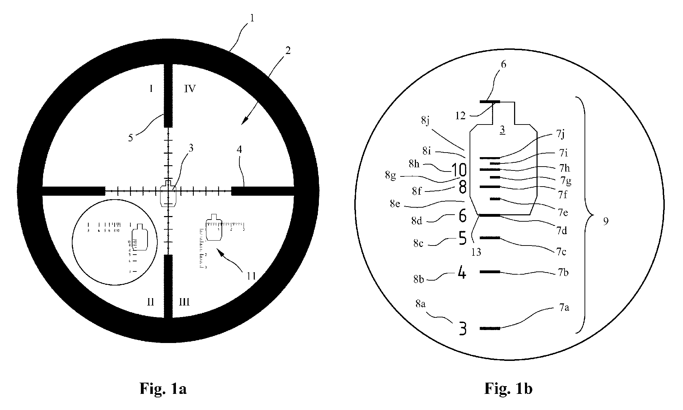

In Figur 1a ist eine optische Vorrichtung 1 mit einer auf einer Strichplatte 2 angeordneten und in den Figuren 1b-d näher dargestellten Messskala 9 zur Bestimmung einer Entfernung E zu einem durch eine Strichplatte 2 betrachteten Objekt 3 schematisch dargestellt.

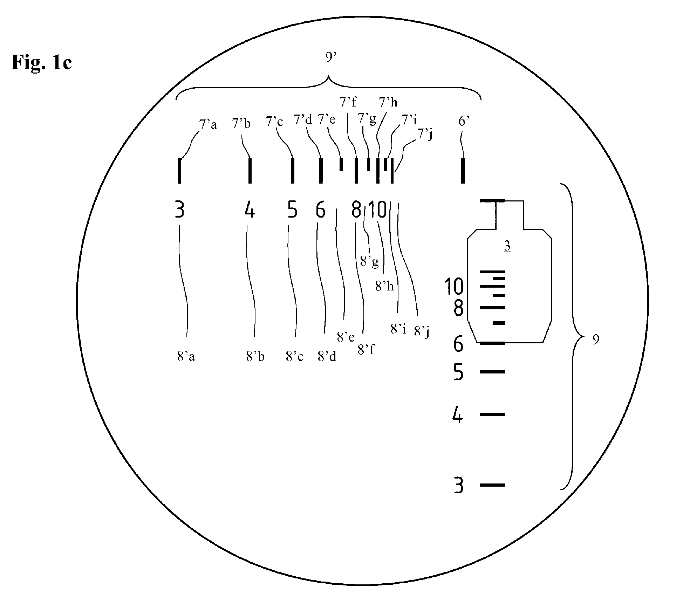

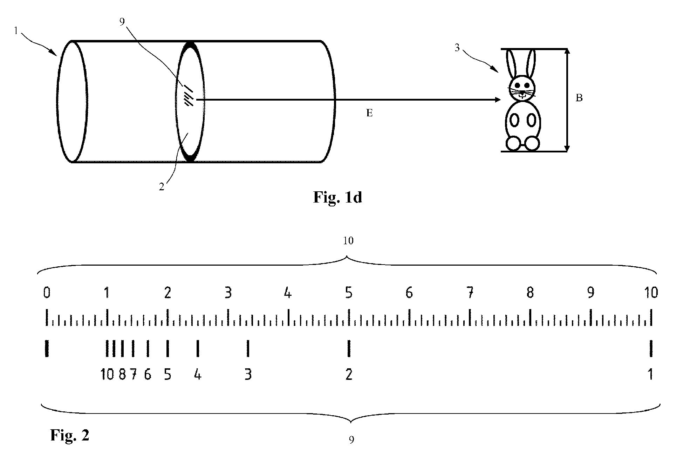

Die in Figur 1 dargestellte durchsichtige Strichplatte 2 ist in einer optischen Vorrichtung 1 angeordnet, bei der es sich beispielsweise um eine Betrachtungs- oder eine Zieloptik, wie z.B. ein Fernglas, ein Fernrohr oder ein Zielfernrohr handeln kann. Durch die Strichplatte 2 der optischen Vorrichtung 1 wird ein insbesondere in Figur 1d gezeigtes Objekt 3 mit zumindest annähernd bekannter Größe B in einer Entfernung E betrachtet. Es wird dabei angenommen, dass die Größe des Objekts 3 wenigstens annähernd geschätzt werden kann oder bekannt ist. Ferner weist die Strichplatte 2 ein Fadenkreuz 4, 5 auf, wobei das Fadenkreuz 4, 5 der Strichplatte 2 in Form von zwei Fäden 4 und 5 ausgebildet ist, die sich im Mittelpunkt der Strichplatte 2 schneiden und die Strichplatte 2 in vier Quadranten (I bis IV) teilen. Gleichwohl ist die Einteilung einer Strichplatte 2 bei einer Betrachtungs- oder einer Zieloptik nicht auf die Einteilung in vier Quadranten festgelegt. Das Fadenkreuz 4, 5 weist weiterhin eine hier nicht näher beschriebene Skala zur Entfernungsmessung als auch zur Wahl bzw. Korrektur des Zielpunktes auf. Hierbei kann es sich beispielsweise um das eingangs genannte "Mildot"-Absehen handeln.

Wie aus Figur 1a weiter ersichtlich ist in Quadrant II der Strichplatte 2 eine in Figur 1b gezeigte erste Markierung 6 in Form einer Bezugsmarkierung 6 und weitere Markierungen in Form von Messmarkierungen 7a-6j angeordnet, wobei jeder Messmarkierung 7a-7j ein ganzzahliger Zahlenwert 8a-8j zugeordnet ist. Hierbei ist anzumerken, dass auf Grund von Platzmangel und auf Grund der Übersichtlichkeit nicht jeden Messmarkierungen 7a-7j ein ganzzahliger Messwert 8a-8j optisch zugeordnet sein muss. So sind in dem Ausführungsbeispiel für die Messmarkierungen 7e, g, i, j keine ganzzahligen Zahlenwerte 8e, g, i, j optisch wiedergegeben.

Die Messmarkierungen 7a-7j sind in einer Reihe angeordnet und definieren mit der Bezugsmarkierung 6 eine Messskala 9.

Im Folgenden wird der Aufbau und die Funktion der Messskala 9 anhand der Figur 1b erläutert.

Der den jeweiligen Messmarkierungen 7a-7j zugeordneten ganzzahligen Zahlenwert 8a-8j der Messskala 9 ist umgekehrt proportional zum Abstand der Bezugsmarkierung 6 von der jeweiligen Messmarkierung 7a-7j.

Dies wird insbesondere in Figur 2 verdeutlicht, welche die Messskala 9 zur Veranschaulichung mit einer Mrad-Skala 10 mit einer Einteilung von 0,1 mrad gegenüberstellt. Die durch die Messmarkierungen 7a-7j gebildete Messskala 9 stellt die ganzzahligen Zahlwerte 8a-8j einer 1/x-Funktion bzw. (Px1)/X dar, wobei X die zugehörigen Werte in mrad bezeichnet.

Durch die Darstellung der Kehrwerte der Mrad-Skala 10 ist die bei der Verwendung einer Mrad-Skala 10 und der zugehörigen Formel notwendige Division schon in die Messskala 9 integriert und wird bei der Berechnung durch eine sehr viel einfacher im Kopf durchführbare Multiplikation ersetzt. Ein Proportionalitätsfaktor P dient lediglich der besseren Handhabbarkeit. So wird verhindert, dass die Messskala 9 Kommastellen enthält. Hierzu wird jeder Zahlenwert der oben genannten Funktion mit einem vorgegebenen Proportionalitätsfaktor P multipliziert, wobei der Proportionalitätsfaktor $P = 10^n$ entspricht, wobei n eine natürliche Zahl ist, beispielsweise n = 1, 2, 3, usw..

Bei n = 1 ergibt sich der Vorteil, dass die Größe des Objekts 3 bei der Rechnung in Zentimetern anstatt Millimetern angenommen werden kann.

Die Formel zur Entfernungsbestimmung lautet damit für n = 1:

$$\textit{Zielgröße B [m] x 100 x Skalenwert (Messwert) = Entfernung [m]}$$

bzw. vereinfacht

$$\textit{Zielgröße B [cm] x Skalenwert (Messwert) = Entfernung [m]}$$

Ein zweites Ausführungsbeispiel gemäß der Erfindung ist in Figur 1c dargestellt. Neben der Messskala 9 ist eine weitere Messskala 9' vorgesehen, wobei die Messskalen 9 und 9' im Wesentlichen senkrecht zueinander angeordnet sind, was ein Erfassen bzw. Abgreifen von Messwerten der Messskalen 9 und 9' in Abhängigkeit der zur Verfügung stehenden zumindest annähernd bekannten Größe des Objekts 3 ermöglicht. Die Messskala 9' setzt sich, wie aus Figur 1b bekannt, ebenfalls aus einer Bezugsmarkierung 6' und Messmarkierungen 7'a-7'j zusammen, wobei jeder Messmarkierung 7'a-7'j ein ganzzahliger Zahlenwert 8'a-8'j zugeordnet ist. Hierbei ist anzumerken, dass auf Grund von Platzmangel und auf Grund der Übersichtlichkeit nicht jeden Messmarkierungen 7'a-7j ein ganzzahliger Messwert 8'a-8'j optisch zugeordnet sein muss. So sind in dem Ausführungsbeispiel für die Messmarkierungen 7'e, g, i, j keine ganzzahligen Zahlenwerte 8'e, g, i, j optisch wiedergegeben. Es ist auch denkbar, statt zwei im Wesentlichen senkrecht zu einander angeordnete Messskalen 9, 9' lediglich einer der beiden Messskalen 9 oder 9' vorzusehen.

Die Messskalen 9, 9' können in einem beliebigen der vier durch das Fadenkreuz 4, 5 gebildeten Quadranten I bis IV platziert sein.

In einer weiteren Ausführungsform kann, wie aus Figur 1a erkenntlich, in dem Quadranten III der Strichplatte 2 eine weitere Skala 11 vorgesehen sein, bei der es sich um eine mrad-Skala handelt. Die Verwendung weiterer Skalen, beispielsweise einer objektspezifischen Skala ist ebenfalls denkbar. Ferner ist es beispielsweise möglich, die Skalen 9, 9' und 11 in einem Quadranten oder jeden beliebigen Quadranten zu platzieren.

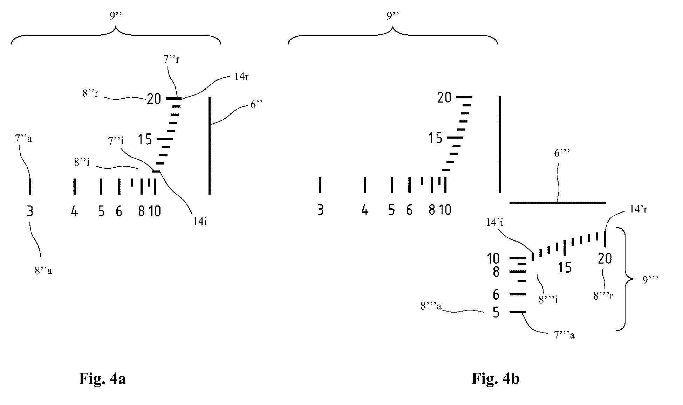

Aufgrund der beim Einsatz in einer optischen Vorrichtung zu erwartenden Größen der Objekte 3 ist es ausreichend, wenn die Messskala 9, 9' beim Wert 2 oder 3 beginnt. Nach oben ist der Bereich der Zahlenwerte 8a-8j durch die zu nah aneinander rückenden Messmarkierungen 7a-7j und die vergrößerungsbedingte Auflösung begrenzt, praktikable Werte sind hier 10-14 je nach Vergrößerung. Für eine Messskala 9', 9' mit einem Maximalwert über 14, z.B. für den Einsatz in hochvergrößernden Spektiven, ist eine alternative Anordnung der Messmarkierungen 7a-7j möglich, welche in Figur 4 gezeigt ist. In dem Ausführungsbeispiel gemäß den Figuren 1 bis 3 sind die Messskalen 9, 9' mit einem Wertebereich von 3-12 dargestellt. Hierbei ist anzumerken, dass auf Grund von Platzmangel und auf Grund der Übersichtlichkeit nicht jeden Messmarkierungen 7a-7j ein ganzzahliger Messwert 8a-8j optisch zugeordnet sein muss.

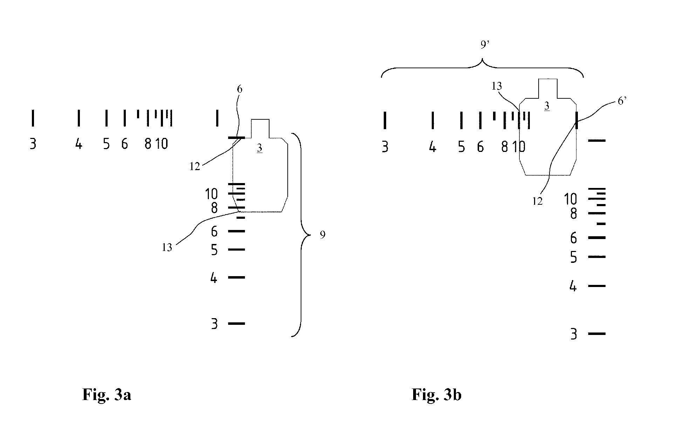

Im Folgenden wird anhand der Figuren 1b sowie den Figuren 3a und 3b das Verfahren zur Bestimmung der Entfernung E zu einem Objekt 3 mit zumindest annähernd bekannter Größe B mittels der zuvor beschriebenen Strichplatte 2 einer optischen Vorrichtung 1 an Hand verschiedener Einsatzfälle beschrieben. So ist in Figur 1b die Größe B, nämlich die Gesamthöhe (75 cm), in Figur 3a die Schulterhöhe (60 cm) und in Figur 3b die Schulterbreite (45 cm) des Objekts 3 wenigstens schätzungsweise bekannt.

Zur Bestimmung der Entfernung E zu einem Objekt 3 mit zumindest annähernd bekannter Größe B werden zunächst zwei Referenzpunkte 12, 13 des Objekts 3 durch die Strichplatte 2 der optischen Vorrichtung 1 betrachtet und die Bezugsmarkierung 6 an den ersten Referenzpunkt 12 des Objekts 3 angelegt. Anschließend wird ein Messwert auf der Messskala 9 oder 9' erfasst, welcher mit dem zweiten Referenzpunkt 13 des Objekts 3 deckungsgleich ist. Bei dem Messwert kann es sich auch um einen Schätzwert handeln, welcher z. B. zwischen den ganzzahligen Messmarkierungen 7a-7j liegt, wenn der Referenzpunkt 13 mit diesem Schätzwert deckungsgleich ist.

Da in den Figuren 1b und 3a die Gesamthöhe und die Schulterhöhe als Größe B des Objekts 3 bekannst sind, wird die Messskala 9 verwendet. Hierbei ergibt sich in Figur 1b der Messwert 6 und in Figur 3a der Messwert 7,5, der von der Messskala 9 abgelesen werden kann. Bei einer bekannten Breite eines Objekts 3 findet, wie in Figur 3c ersichtlich, die Messskala 9' Verwendung. Hierbei ergibt sich der Messwert 10, der von der Messskala 9' abgelesen werden kann.

Um nun die Entfernung E zum Objekt 3 zu bestimmen erfolgt gemäß der zuvor genannten Formel

$$\textit{Zielgröße B [cm]} \cdot \textit{Skalenwert (Messwert)} = \textit{Entfernung E [m]}$$

eine Multiplikation der zumindest annähernd bekannten Größe B des Objekts 3 mit dem erfassten Messwert. Gemäß der in den Figuren 1b, 3a und 3b bekannten Größen B ergeben sich folgende Berechnungen:

> Bekannte Gesamthöhe (75 cm, Figur 1b):  75 x 6 = 450 [m]
> Bekannte Schulterhöhe (60 cm, Figur 3a):  60 x 7,5 = 450 [m]
> Bekannte Schulterbreite (45 cm, Figur 3b):  45 x 10 = 450 [m]

Jede einzelne der bekannten Größen B (Höhe oder Breite) der in den Figuren 1a, 3a und 3b gezeigten Objekte 3 könnte verdeckt und daher nicht für die Entfernungsermittlung zugänglich sein. Durch die universelle Verwendung der Messskalen 9, 9' und die Verfügbarkeit sowohl einer vertikalen als auch einer horizontalen Messskala 9, 9' kann auf ein anderes, sichtbares Maß ausgewichen und trotzdem schnell und ohne das Objekt 3 aus den Augen zu verlieren die Entfernung E ermittelt werden, da nicht auf die Mrad-Skala zurückgegriffen werden muss.

Die Messskalen 9, 9' sind nach einer leicht verständlichen Erklärung einfach und intuitiv verwendbar. Die Erfindung vereinfacht die Berechnung der Entfernung dadurch, dass eine Division durch eine Multiplikation ersetzt wird. Da sie sich einfach mit einer Mrad-Skala 11 kombinieren lässt, können die Vorteile des erfindungsgemäßen Systems mit den bekannten Systemen wahlweise in einem Absehen bzw. Fadenkreuz genutzt werden. Durch die vorzugsweise symmetrische Anordnung ergibt sich zudem ein ausgewogenes und charakteristisches Erscheinungsbild. Gleichwohl ist jede unterschiedliche Anordnung der Skalen 9, 9' und 11 denkbar.

In Figur 4a ist eine erste Ausführungsform einer erweiterten Messskala 9" mit Messmarkierungen 7"a-7"r und deren zugeordneten ganzzahligen Zahlenwerte 8"a-8"r abgebildet. Die Messskala 9" umfasst nun einen maximalen Wert von 20 für die ganzzahligen Zahlenwerte 8"a-8"r. Diese Anordnung der Messskala 9" ist beispielsweise für den Einsatz in hochvergrößernden Spektiven möglich.

Auf Grund der zu nah aneinanderrückenden Messmarkierungen 7"a-7"r ist für die Messmarkierungen 7"i-7"r eine andere Anordnung notwendig, welche sich aus Figur 4a ergibt. So bilden die Messmarkierungen 7"a-7"r keine durchgehende horizontale Reihe, denn ein Teil der Messmarkierungen 6"i-6"r steht senkrecht zu den Messmarkierungen 7"a-7"h und verläuft vertikal nach oben.

Eine Bestimmung der Entfernung E zum Objekt 3 erfolgt jedoch ebenfalls nach dem zuvor genannten Verfahren. Allerdings ist hierbei zu beachten, dass beim Erfassen des Messwerts auf der Messskala 9", welcher mit dem zweiten Referenzpunkt 13 des Objekts 3 deckungsgleich ist, lediglich ein Punkt 14i-14r der Messmarkierungen 7"i-7"r mit dem zweiten Referenzpunkt 13 des Objekts 3 deckungsgleich sein muss. Aus Gründen der Übersichtlichkeit sind in den Figuren 4a und 4b nicht alle Punkte 14i-14r, alle Messmarkierungen 7"a-7"r und dazugehörigen ganzzahligen Zahlenwerte 8"a-8"r mit Bezugszeichen versehen.

In Figur 4b ist eine zweite Ausführungsform einer erweiterten Messskala 9'''gezeigt, welche sich der Bezugsmarkierung 6''' und aus mehrere Messmarkierungen 7'''a-7'''p mit Punkten 14'g-14'p und deren zugeordneten ganzzahligen Zahlenwerte 8'''a-8'''p zusammensetzt. Die Messskala 9" und 9''' sind im Wesentlichen senkrecht zueinander angeordnet, was ein Erfassen bzw. Abgreifen von Messwerten der Messskalen 9" und 9''' in Abhängigkeit der zur Verfügung stehenden zumindest annähernd bekannten Größe B des Objekts 3 ermöglicht. Es ist auch denkbar, statt zwei im Wesentlichen senkrecht zu einander angeordnete Messskalen 9", 9''' lediglich eine der beiden Messskala 9" oder 9''' vorzusehen.

**Patentansprüche**

**1.** Optische Vorrichtung (1) mit mindestens einer Messskala (9) zur Bestimmung der Entfernung E zu einem durch die Messskala (9) betrachteten Objekt (3) mit zumindest annähernd bekannter Größe B, wobei die Messskala (9) eine Bezugsmarkierung (6) und mindestens eine weitere Messmarkierung (7a-7j) mit einem ihr zugeordneten Zahlenwert (8a-8j) umfasst, der umgekehrt proportional zum Abstand der Bezugsmarkierung (6) von der jeweiligen Messmarkierung (7a-7j) ist, und sich die Entfernung E zu dem durch die Messskala (9) betrachteten Objekt (3) durch eine Multiplikation der Größe B des Objekts (3) mit einem von der Messskala (9) abgelesenen Messwert ergibt.

2. Optische Vorrichtung nach Anspruch 1, **dadurch gekennzeichnet, dass** die Messskala (9) mehrere Messmarkierungen (7a-7j) mit zugeordneten ganzzahligen Zahlenwerten (8a-8j) umfasst, wobei sich jeder Zahlenwert (8a-8j) aus einer Multiplikation des reziproken Abstands der zugeordneten Messmarkierung (7a-7j) von der Bezugsmarkierung (6) mit einem vorgegebenen Proportionalitätsfaktor P ergibt.

3. Optische Vorrichtung nach Anspruch 2, **dadurch gekennzeichnet, dass** der Proportionalitätsfaktor $P = 10^n$ entspricht, wobei n die natürlichen Zahlen umfasst.

4. Optische Vorrichtung nach einem der Ansprüche 1 oder 3, **dadurch gekennzeichnet, dass** den jeweiligen Messmarkierungen (7a-7j) optisch sichtbare Zahlenwerte (8a-8j) zugeordnet sind.

5. Optische Vorrichtung nach einem der Ansprüche 1 bis 4, **dadurch gekennzeichnet, dass** die Messmarkierungen (7a-7j) in einer Reihe angeordnet sind.

6. Optische Vorrichtung nach einem der Ansprüche 1 bis 5, **dadurch gekennzeichnet, dass** sie mehrere unterschiedlich angeordnete Messskalen (9, 9', 11) aufweist.

7. Optische Vorrichtung nach Anspruch 6, **dadurch gekennzeichnet, dass** die Messskalen (9, 9', 11) unterschiedliche Einteilungen aufweisen.

8. Optische Vorrichtung nach Anspruch 6 oder 7, **dadurch gekennzeichnet, dass** die mehreren Messskalen (9, 9', 11) im Wesentlichen senkrecht zueinander angeordnet sind.

9. Optische Vorrichtung nach einem der Ansprüche 1 bis 8, **dadurch gekennzeichnet, dass** die mindestens eine Messskala (9) auf einer Strichplatte (2) angeordnet ist.

10. Verfahren zur Bestimmung der Entfernung E zu einem Objekt (3) mit zumindest annähernd bekannter Größe B mittels einer optischen Vorrichtung (2) mit einer Messskala (9), die eine Bezugsmarkierung (6) und mindestens eine weitere Messmarkierung (7a-7j) mit einem ihr zugeordneten Zahlenwert (8a-8j) umfasst, der umgekehrt proportional zum Abstand der Bezugsmarkierung (6) von der jeweiligen Messmarkierung (7a-7j) ist,
**gekennzeichnet durch** folgende Schritte:

A) Betrachten von zwei Referenzpunkten (12, 13) des Objekts (2) **durch** die Messskala (9);
B) Anlegen der Bezugsmarkierung (6) an den ersten Referenzpunkt (12) des Objekts (3);
C) Erfassen eines Messwerts auf der Messskala (9), welcher mit dem zweiten Referenzpunkt (13) des Objekts (3) deckungsgleich ist,
D) Ablesen des erfassten Messwerts auf der Messskala (9) und
E) Bestimmen der Entfernung E zum Objekt (3) **durch** eine Multiplikation der zumindest annähernd bekannten Größe B des Objekts (3) mit dem erfassten Messwert.

Fig. 1a

Fig. 1b

Fig. 1c

**Fig. 1d**

**Fig. 2**

Fig. 3a

Fig. 3b

**Fig. 4a**

**Fig. 4b**

Europäisches
Patentamt

European
Patent Office

Office européen
des brevets

**EUROPÄISCHER RECHERCHENBERICHT**

Nummer der Anmeldung

EP 15 15 3726

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 94 09 374 U1 (DECKER MICHAEL [DE]; SAXONIA SYSTEMTECHNIK GMBH [DE]) 25. August 1994 (1994-08-25) * Abbildung 2 * * Seite 2 * ----- | 1-10 | INV. F41G1/473 |
| X | US 1 190 121 A (CRITCHETT JAMES CLYDE [US]) 4. Juli 1916 (1916-07-04) * Abbildungen 1,2 * * Seite 1, Zeile 23 - Zeile 84 * ----- | 1-6,8-10 | |
| A,D | US 7 185 455 B2 (ZADEREY SERGEY Y [US]) 6. März 2007 (2007-03-06) * Zusammenfassung; Abbildung 4 * * Spalte 4, Zeile 8 - Zeile 61 * ----- | 1,10 | |
| A | US 4 584 776 A (SHEPHERD DANIEL R [US]) 29. April 1986 (1986-04-29) * Zusammenfassung; Abbildungen 7,8 * * Spalte 6, Zeile 7 - Spalte 7, Zeile 16 * ----- | 1,10 | RECHERCHIERTE SACHGEBIETE (IPC) |
| A | US 2006/260171 A1 (COLE BRAND D [US] ET AL) 23. November 2006 (2006-11-23) * Zusammenfassung; Abbildungen 2-4 * * Absätze [0034], [0045], [0048] * ----- | 1,10 | F41G |

Der vorliegende Recherchenbericht wurde für alle Patentansprüche erstellt

| Recherchenort | Abschlußdatum der Recherche | Prüfer |
|---|---|---|
| Den Haag | 6. Juli 2015 | Schwingel, Dirk |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 15 3726

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-07-2015

| Im Recherchenbericht angeführtes Patentdokument | Datum der Veröffentlichung | Mitglied(er) der Patentfamilie | Datum der Veröffentlichung |
|---|---|---|---|
| DE 9409374 U1 | 25-08-1994 | KEINE | |
| US 1190121 A | 04-07-1916 | KEINE | |
| US 7185455 B2 | 06-03-2007 | US D542879 S1<br>US 2006236586 A1 | 15-05-2007<br>26-10-2006 |
| US 4584776 A | 29-04-1986 | KEINE | |
| US 2006260171 A1 | 23-11-2006 | US 2006260171 A1<br>US 2008010891 A1<br>WO 2006127086 A2 | 23-11-2006<br>17-01-2008<br>30-11-2006 |

EPO FORM P0461

Für nähere Einzelheiten zu diesem Anhang : siehe Amtsblatt des Europäischen Patentamts, Nr.12/82

**EP 2 916 097 A1**

**IN DER BESCHREIBUNG AUFGEFÜHRTE DOKUMENTE**

**In der Beschreibung aufgeführte Patentdokumente**

- US 7185455 B2
- US 5960576 A